# EUROPÄISCHE PATENTSCHRIFT

(11) **EP 1 825 217 B1**
(45) Veröffentlichungstag und Bekanntmachung des Hinweises auf die Patenterteilung: **11.11.2015**
(21) Anmeldenummer: 05813473.5
(22) Anmeldetag: 01.12.2005
(51) Int. Cl.: G01B 11/24, G02B 21/00

(54) **VERMESSUNGSEINRICHTUNG UND VERFAHREN NACH DEM GRUNDPRINZIP DER KONFOKALEN MIKROSKOPIE**
MEASURING DEVICE AND METHOD THAT OPERATES ACCORDING TO THE BASIC PRINCIPLES OF CONFOCAL MICROSCOPY
DISPOSITIF DE MESURE ET PROCÉDÉ FONDE SUR LE PRINCIPE DE BASE DE LA MICROSCOPIE CONFOCALE

(30) Priorität: 09.12.2004 DE 102004059526
(43) Veröffentlichungstag der Anmeldung: 29.08.2007
(73) Patentinhaber: Sirona Dental Systems GmbH, 64625 Bensheim (DE)
(72) Erfinder: SCHWOTZER, Axel, 64521 Gross-Gerau (DE)
(74) Vertreter: Sommer, Peter
(86) Internationale Anmeldenummer: PCT/EP2005/056370
(87) Internationale Veröffentlichungsnummer: WO 2006/061347

(56) Entgegenhaltungen:
- WO-A-00/08415
- WO-A-2005/091046
- US-A1- 2002 167 723
- US-A1- 2004 238 719
- US-A1- 2005 122 577
- US-B1- 6 399 942

## Beschreibung

### Technisches Gebiet

Die Erfindung betrifft eine Vermessungseinrichtung nach dem Grundprinzip der konfokalen Mikroskopie gemäß dem Oberbegriff des Anspruchs 1 und ein entsprechendes Verfahren gemäß dem Oberbegriff des Anspruchs 11.

Derartige Vermessungseinrichtungen werden zur Vermessung eines Objekts verwendet und erlauben dabei sowohl die Vermessung eines Punktes entlang einer Achse (zweidimensionale Vermessung) als auch einer um die Achse herum angeordneten Fläche (dreidimensionale Vermessung). Damit eignet sich eine derartige Vorrichtung für einen Punktsensor wie auch für einen Flächensensor. Die Erfindung betrifft insbesondere die freihändige intraorale Vermessung von unbeschichteten Zähnen mit hoher Genauigkeit.

### Stand der Technik

Die Grundprinzipien der konfokalen 3D-Vermessung sind bekannt. Die Bestimmung der Höhe eines Objektpunktes geschieht nach dem Stand der Technik dadurch, dass pro Punkt einer Lochrasterplatte einer Blendenanordnung bestimmt wird, in welcher Stellung des Objekts relativ zur Abbildungsoptik bzw. zur gesamten Messvorrichtung die größte Lichtmenge rückwärtig durch die Lochrasterplatte tritt. Dazu wird während der Bewegung des Objekts relativ zur Abbildungsoptik (oder Bewegung eines optischen Elementes in der Messvorrichtung) pro Höhenauflösungsstufe ein Einzelbild aufgezeichnet und für jeden Bildpunkt wird das Bild aus der Bildfolge ermittelt, bei dem die Intensität am größten ist.

Aus der Kenntnis der Stellung des Einzelbildes innerhalb der Bildfolge heraus kann das Höhenprofil des Objekts bestimmt werden. Dabei müssen allerdings typischerweise Bildfolgen aus einigen 10 bis 100 Bildern aufgezeichnet werden, so dass der Messvorgang bei Verwendung gängiger Aufnahmetechniken mehrere Sekunden oder noch länger dauern muss. Eine Verkürzung der gesamten Aufnahme auf einen für die Erstellung einer intraoralen Dentalaufnahme als akzeptabel angesehenen Zeitraum von etwa 0,2 s erfordert die Verwendung extrem aufwendiger Videotechnik und Datenauswertung oder den Verzicht auf Genauigkeit in mindestens einer der drei Dimensionen. Außerdem werden auch an die Mechanik zur Erzeugung der relativen Bewegung zwischen Objektiv und Abbildungsoptik hohe Anforderungen gestellt.

Die WO 00/08415 A1 offenbart ein Verfahren und eine Apparatur, bei der durch die Abbildungsoptik ein Punktmuster auf eine oder mehrere verschiebbare Fokalebenen projiziert wird. Eine Beschleunigung des Messvorgangs kann durch Verwendung verschiedener Lichtkomponenten erreicht werden.

Die US6,399,942 zeigt ein konfokales Mikroskop, bei dem die Lichtleistung mit einem LCD-Schirm örtlich so an die Reflektivität des Messobjekts angepasst wird, dass der Detektor ein gleichförmiges Signal aufnimmt. Die US2002/0167723 zeigt ebenfalls ein konfokales Mikroskop. Hier wird durch das Objektiv die Fokusebene während der Messung verändert.

Im Stand der Technik ist bekannt, eine schnelle Änderung des Abstandes zwischen Objekt und Aufnahmeoptik durch Einfügen eines Elements aus einem Medium mit anderer optischer Dichte zu erzeugen, welche eine veränderliche Dicke hat und so bewegt wird, dass die effektive Dicke im Zeitverlauf verändert wird. Als Medium kommt hier beispielsweise Glas in Frage.

Weiterhin ist der Einsatz von 3D-Vermessungstechniken bei einer Intraoralkamera zur Vermessung von Zähnen bekannt, die nach dem Prinzip der Phase-Shift-Triangulation arbeiten. Nachteilig ist hier, dass zur Verbesserung der zurückgestreuten Strahlung eine Beschichtung der Zähne notwendig ist.

Darüber hinaus ist für die gängigen 3D-Vermessungsverfahren der Einsatz von Punktsensoren oder Zeilensensoren bekannt, wobei dann zur Vermessung von 3D-Objekten eine Verschiebung von Objekt relativ zum Sensor vorgenommen wird, was oftmals als Scannen bezeichnet wird.

Es sind weiterhin Triangulationsverfahren bekannt, die eine einzige Aufnahme mit einer Blitzlampe durchführen. Die Messgenauigkeit einer Vermessung nach einem solchen Verfahren ist jedoch gering, da der gesamte Tiefenbereich auf einmal festgehalten werden muss.

Es ist daher die Aufgabe der Erfindung, ein Verfahren und eine Vermessungseinrichtung anzugeben, das eine schnelle und dennoch exakte intraorale Vermessung ermöglicht.

### Offenbarung der Erfindung

Die Bilderfassung von je einem Bild pro Höhenauflösungsstufe wird ersetzt durch eine Modulation der Eigenschaft des Lichts, z.B. der Intensität oder der Farbe der Beleuchtung, die zu einem entsprechend modulierten Signal auf einem Bildempfänger und damit zu einem Messwert führt.

Die Vermessungseinrichtung zur konfokalen Vermessung eines Objekts wird durch den Anspruch 1 definiert.

Eine Beschichtung von Zähnen ist nicht erforderlich, da die Intensitätswerte aufgrund der Auswertung des Fokuspunktes auch bei schwierigen Geometrien hinreichend auswertbar sind.

Vorteilhafterweise ist die beeinflusste Eigenschaft des Lichts ausgewählt aus der Lichtintensität und der Wellenlänge bzw. dem Spektrum. Diese Eigenschaften lassen sich mit CCD-Sensoren oder mit CMOS-Sensoren ohne Schwierigkeiten erfassen.

Vorteilhafterweise ist für die Beeinflussung der Lichtintensität des auf das Objekt abgestrahlten Lichts eine Regelung für die Lichtquelle vorgesehen. Hier ist eine Regelung der Energiezufuhr denkbar, beispielsweise durch Veränderung der Spannung und/oder der Stromstärke. Lichtintensitäten lassen sich ohne Schwierigkeiten und mit hoher Genauigkeit mit digitalen Bildsensoren messen und auswerten.

Vorteilhafterweise ist ein Sensor für die Erfassung der Eigenschaft des auf das Objekt abgestrahlten Lichts vorhanden. So ist es möglich, die Qualität des abgestrahlten Lichts festzustellen und Abweichungen, die etwa durch Verschleiß, Temperatur-, Strom- oder Spannungsschwankungen bedingt sind, auszugleichen.

Der Sensor kann insbesondere Bestandteil der Lichtquelle sein und es kann mittels eines Ausgangssignals des Sensors eine Steuerung und/oder Regelung des Stroms und/oder der Versorgungsspannung der Lichtquelle gemäß dem vorgegebenen Profil der Lichteigenschaft erfolgen. Derartige Sensoren sind bei Laserdioden als Monitordiode zur Konstanthaltung der Leistung zwar grundsätzlich bekannt, werden hier jedoch zu einem neuen Zweck eingesetzt.

Vorteilhafterweise wird das vom Objekt zurückgestrahlte Licht über Mittel zur Beeinflussung der Lichteigenschaften vor dem Auftreffen auf den Sensor verändert. Dies ermöglicht es, das Objekt mit einer gleichmäßig hohen Lichtintensität zu beleuchten, was ein gutes Signal-RauschVerhältnis schafft.

Vorteilhafterweise weisen die Mittel zur Beeinflussung der Lichteigenschaften eine veränderliche Transparenz auf. Dadurch kann die Lichtintensität, die auf den Sensor trifft, in einfacher Weise verändert werden.

Besonders vorteilhaft ist die Ausgestaltung der Mittel mit veränderlicher Transparenz als LCD-Schirm. Bei LCD-Schirmen ist eine einfache Steuerung der Transparenz über das Anlegen verschiedener Spannungen möglich. Derartige LCD-Schirme sind im Stand der Technik bekannt, beispielsweise in der US 4,837,732.

Alternativ können die Mittel veränderlicher Transparenz in Form zweier gegeneinander verstellbarer Polarisationsfilter ausgebildet sein. Solche Polarisationsfilter sind preiswert herstellbar und die Steuerung der Transparenz ist leicht, da die Zusammenhänge zwischen der Stellung der Polarisationsfilter zueinander und der sich daraus ergebenden Transparenz stetig sind.

Eine andere vorteilhafte Alternative betrifft Mittel, die das Farbspektrum des von der Lichtquelle auf das Objekt abgestrahlten Lichts oder des von dem Objekt zurückgestrahlten und auf den Sensor auftreffende Licht verändern. Damit kann die Beleuchtungsstärke konstant gehalten werden, womit eine größere Signalhöhe und damit ein besseres Signal-Rausch-Verhältnis erzielt wird.

In einer vorteilhaften Ausgestaltung der Vermessungseinrichtung sind Auswertemittel zur Auswertung aufgenommener Bilddaten und zur Erzeugung von Vermessungsdaten und weiterhin Speichermittel vorgesehen, die die Bilddaten und/oder die Vermessungsdaten speichern. Damit ist eine sofortige Auswertung und Archivierung der Vermessung möglich.

Besonders vorteilhaft ist es, wenn in den Speichermitteln Prüfdaten gespeichert sind und wenn die Auswertemittel über Vergleichsmittel verfügen, um mit Hilfe dieser Prüfdaten Korrekturdaten zu erzeugen und abzuspeichern und die in den Speichermitteln abgelegten Korrekturdaten auf die Vermessungsdaten anzuwenden. Dies dient zur Kalbration der Eigenschaft des Lichts und der Kalibration des optischen Systems. Zum Kalibrieren kann ein Prüfkörper mit exakt definierten Eigenschaften vermessen werden und aus den so gewonnenen Prüfdaten Korrekturdaten abgeleitet und gespeichert werden. Dies erhöht die Messgenauigkeit und kann alterungsbedingte Veränderungen der Änderung der Eigenschaft des Lichts und/oder der Empfindlichkeit des Bildsensors ausgleichen.

Erfindungsgemäss wird der Einfluss des Objektes auf das Bild durch einen Vergleichswert eliminiert, der durch die Aufnahme eines Referenzbildes gewonnen wird und der mit dem Messwert verglichen wird. Dazu sind Mittel zur Bestimmung des Vergleichswerts anhand einer zweiten Aufnahme mit einer zweiten Aufnahmezeit und einem zweiten Profil für den Zusammenhang zwischen der Eigenschaft des Lichts und dem Abstand vorhanden.

Das Referenzbild bildet die individuellen Eigenschaften des Objekts ab, so zum Beispiel eine unterschiedliche Reflektivität der Oberfläche oder die Bildung von Schatten oder Halbschatten durch teilweise Verdeckung der Beleuchtung durch Vorsprünge am Objekt, die sich mit den Vermessungsdaten überlagern. Es ist vorteilhaft, das Referenzbild mit konstant gehaltenen Lichteigenschaften zu erzeugen, wobei zur Aufnahme wie bei einer Vermessungsaufnahme der optische Abstand der Bildebene verändert wird.

Eine so weitergebildete flächenhafte konfokale Vermessung hat den Vorteil, dass für den gesamten Tiefenbereich nicht mehr eine Aufnahme pro Höhenauflösungsstufe erstellt werden muss, sondern dass nur zwei Aufnahmen erzeugt werden müssen, aus denen eine Höhenkoordinate und damit ein Höhenbild erstellt werden kann.

Besonders vorteilhaft ist es, wenn die Mittel zur Veränderung der optischen Weglänge für die erste und die zweite Aufnahme verschiedene Richtungen durchfahren können. Die Verzögerung zwischen der ersten und der zweiten Aufnahme wird auf diese Weise minimiert.

Ein weiterer Gegenstand der Erfindung betrifft ein Verfahren zur konfokalen Vermessung eines Objekts, das durch den Anspruch 11 definiert wird.

Erfindungsgemäss wird der Vergleichswert anhand einer zweiten Aufnahme mit einer zweiten Aufnahmezeit und einem zweiten Profil für die Eigenschaften des Lichts und den Abstand bestimmt.

Gemäß einer vorteilhaften Weiterbildung erfährt die Eigenschaft des Lichts bei der Bestimmung des Vergleichswerts eine geringere Veränderung als bei der Erstellung der Messaufnahme.

Besonders vorteilhaft ist es, wenn die Eigenschaft des Lichts bei der Bestimmung des Vergleichswerts konstant gehalten ist. Dann erfolgt zur Erfassung des Objektes eine Aufnahme ohne Veränderung der auf das Objekt auftreffenden Lichtintensität und anschließend eine Aufnahme mit Veränderung der auf das Objekt auftreffenden Lichtintensität.

Wenn bei beiden Aufnahmen der optische Weg in gleicher Weise über die Zeit verändert wird, hat dies den Vorteil, dass eine Verarbeitung des Vergleichswertes und des Messwertes ohne weitere Korrekturmaßnahmen möglich ist. Somit kann aus den beiden Aufnahmen aus den Intensitätsverhältnissen das Höhenbild pixelgenau berechnet werden.

Vorteilhafterweise wird die zweite Aufnahme in einem Durchgang vor oder nach der Vermessung des Objekts erzeugt. Dies ermöglicht es, einen auswertbaren Bilddatensatz während eines Durchgangs zu erzeugen.

Vorteilhafterweise wird die Eigenschaft des Lichtes mit einem Sensor erfasst und dessen Ausgangssignal zur Regelung der Änderung der Eigenschaft des Lichts verwendet. Damit ist eine besonders hohe Wiederholgenauigkeit möglich.

Vorteilhafterweise wird das Profil im Rahmen einer Kalibration an veränderte Umgebungsbedingungen angepasst. Damit lassen sich Verschleißerscheinungen, beispielsweise die Abnahme der Leuchtstärke oder die Veränderung der Kennlinie der eingesetzten Lichtquelle eliminieren und eine genaue Auswertung auch bei längerem Einsatz der Lichtquelle gewährleisten. Darüber hinaus können mittels einer Kalibration Ungenauigkeiten des optischen Systems festgestellt werden und Korrekturdaten erzeugt werden, die auf Vermessungsdaten angewendet werden. Dadurch steigt die Genauigkeit der Vermessungsdaten.

### Kurze Beschreibung der Zeichnungen

Das erfindungsgemäße Verfahren wird anhand der Zeichnung erläutert. Es zeigt:
- Fig. 1: einen grundsätzlichen Aufbau der Vermessungseinrichtung nach dem Grundprinzip der konfokalen Mikroskopie, die
- Fig. 2: den zeitlichen Verlauf der Beleuchtung in Abhängigkeit von der Belichtungszeit bzw. dem Abstand des Fokuspunktes zur Abbildungsoptik, die
- Fig. 3: den zeitlichen Verlauf der Intensität bei einer Veränderung des Fokus über den gesamten Messbereich mit konstanter Beleuchtung für drei unterschiedliche Objektpunkte, die
- Fig. 4: den zeitlichen Verlauf der Intensität bei Durchfokussieren mit variabler Beleuchtung, die
- Fig. 5: ein ideales Objekt für die Messung aus Fig. 3, 4, die
- Fig. 6: ein übliches Objekt für die Messung aus Fig. 3, 4, die
- Fig. 7: eine Prinzipskizze für die Überwachung und/oder Regelung der Lichteigenschaft und die
- Fig. 8: eine Prinzipskizze der Vermessungseinrichtung als Einheit bei der Kalibration der Vermessungseinrichtung.

### Ausführungsform der Erfindung

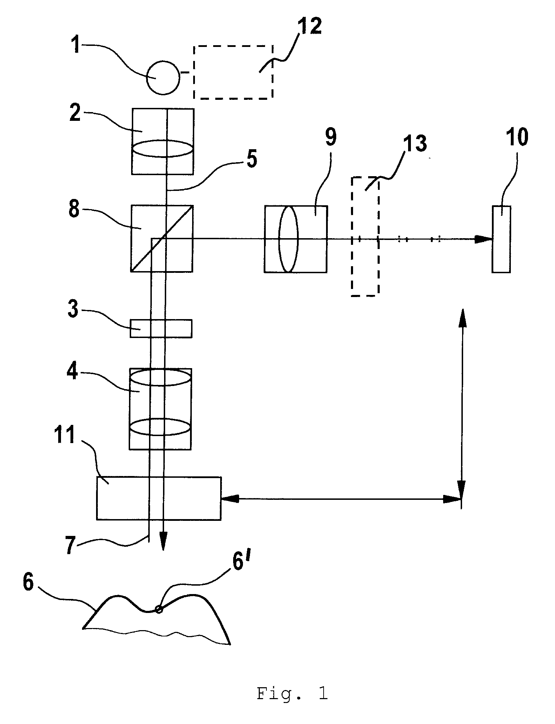

Eine konfokale Messanordnung gemäß der Fig. 1 umfasst z.B. eine Nipkow-Scheibe oder ein Mikrolinsenarray, einen Strahlteiler, eine Abbildungsoptik und Mittel zum Verändern der optischen Weglänge.

In Fig. 1 ist ein grundsätzlicher Aufbau der Vermessungseinrichtung nach dem Grundprinzip der konfokalen Mikroskopie dargestellt. Die Vermessungseinrichtung umfasst eine Lichtquelle 1, die typischerweise monochromatisches oder weißes Licht abstrahlt.

Über eine Optik 2 wird die Lichtquelle 1 in geeigneter Weise auf eine Blendenanordnung 3 abgebildet. Die Blendenanordnung 3 kann als Lochrasterplatte ausgebildet sein, bei höher entwickelten Anwendungen kann auch eine Anordnung von Mikrolinsen verwendet werden. Diese Anordnung kann gegebenenfalls zur flächendeckenden Abtastung des Objekts 6 auch schnell bewegt werden, wobei dann eine Aufnahme für jede Position erforderlich ist.

Mittels einer Abbildungsoptik 4, die meist telezentrisch gestaltet ist, wird das aus der Blendenanordnung 3 austretende Licht 5 auf ein zu vermessendes Objekt 6 abgebildet. Der optische Abstand der Abbildungsoptik 4 kann relativ zum Objekt 6 verändert werden, so dass unterschiedliche Höhenlinien des zu vermessenden Objekts 6 in der Bildebene der Abbildungsoptik 4 liegen. Die auf diesem Weg erzeugten Lichtpunkte auf dem zu vermessenden Objekt 6 werden von diesem zurückgestreut (oder reflektiert) und durchtreten die Blendenanordnung 3 als Beobachtungsstrahlengang 7 in umgekehrter Richtung wie das Licht 5.

Die zurückgestreute Lichtmenge erreicht immer für die Objektpunkte 6' des Objekts 6 ein Maximum, die gerade in der Bildebene der Abbildungsoptik 4 liegen. In diesem Fall wird die Lichtintensität deutlich stärker als bei einer Rückstreuung von Licht außerhalb der Bildebene.

Das die Blendenanordnung 3 rückwärtig durchdringende Licht des Beobachtungsstrahlengangs 7 wird mittels eines Strahlteilers 8 und einer Empfängeroptik 9 auf einen Bildempfänger 10 abgebildet, mittels welchem ein elektronisches Signal gewonnen wird, das einem Rechner zur Auswertung zugeführt wird.

Die Veränderung des optischen Abstands zwischen der Abbildungsoptik 4 und dem Objekt 6 geschieht über Mittel zur Veränderung der optischen Weglänge 11.

Es ist weder notwendig, dass ein linearer Zusammenhang zwischen der Bewegung dieses Elements und dem scharfen Bereich im Objektraum besteht, noch ist es notwendig, dass eine bestimmte Höhenlinie im Objekt zur gleichen Zeit scharf abgebildet wird, da ein derartiges Verhalten durch entsprechende Kalibrierverfahren korrigierbar ist.

Eine bevorzugte Anordnung eines derartigen Elements als ein Mittel 11 zur Veränderung der optischen Weglänge im Strahlengang zwischen der Blendenanordnung 3 einerseits und dem Objekt 6 andererseits kann aus zwei Glaskeilen bestehen, die gegeneinander verschoben werden, so dass als Ergebnis eine Glasplatte veränderlicher Dicke entsteht.

Die effektive Weglänge kann auch durch einen gefalteten Strahlengang und einen verfahrbaren Reflektor verändert werden. Vorteilhafterweise kann der Antrieb des Reflektors durch eine Tauchspule ähnlich wie bei einem Lautsprecher erfolgen.

In der Vermessungseinrichtung befinden sich darüber hinaus Mittel zur Beeinflussung der Beleuchtung. Hierzu sind Steuermittel 12 vorgesehen, die mit der Lichtquelle 1 zusammenwirken. Die Steuermittel 12 können beispielsweise aus einem Sensor und einer Steuerelektronik bestehen, die den Strom der Beleuchtungsquelle regeln. Der im Steuermittel 12 verbaute Sensor misst dazu die aktuelle Beleuchtungsstärke und/oder die aktuelle Lichtfarbe und gibt den gemessenen Wert an die Steuerelektronik weiter. Diese vergleicht den Istwert mit einem Sollwert, der beispielsweise in einem Profil abgelegt ist und regelt auf der Grundlage der Differenz die Spannungs- und/oder Stromzufuhr zur Beleuchtung nach.

Alternativ oder ergänzend ist es auch möglich, in den Strahlengang zwischen Objekt 6 und Bildempfänger 10 einen LCD-Schirm 13 vorzusehen, der eine zeitlich veränderliche Abschwächung der auf den Bildempfänger 10 auftreffenden Lichtstärke ermöglicht.

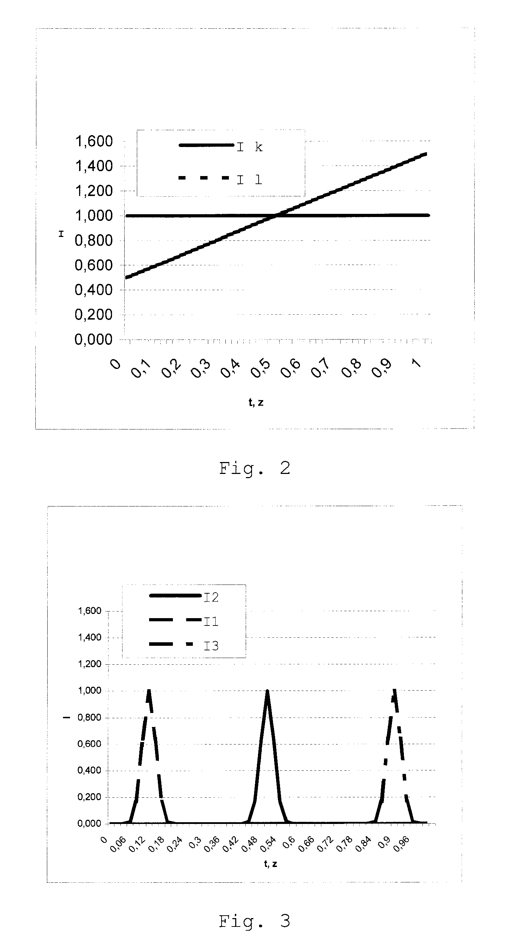

In **Fig. 2** ist der zeitliche Verlauf der Beleuchtung in Abhängigkeit von der Belichtungszeit t bzw. des Abstandes z des Fokuspunktes zur Abbildungsoptik dargestellt. Die durchgezogene Kurve Iₖ entspricht einer konstanten Beleuchtung während des gesamten Aufnahmezeitraums t_{B1}, die Kurve I₁ entspricht einer linearen Veränderung der Lichtintensität während des Aufnahmezeitraums t_{B1}.

In **Fig. 3** ist der zeitliche Verlauf der Intensität auf dem Bildempfänger bei einer Veränderung des Fokus über den gesamten Messbereich mit konstanter Beleuchtung Iₖ für drei unterschiedliche Objektpunkte dargestellt. Für den ersten Objektpunkt zum Zeitpunkt t₁= 0,1 t_{B1} ergibt sich bei einem idealen Objekt ein Intensitätswert I, der auch an anderen Objektpunkten, die in einem unterschiedlichen Abstand liegen, erreicht wird, dargestellt zum Zeitpunkt t₂ = 0,5 t_{B1} und t₃ = 0, 9 t_{B1}.

Das in Fig. 3 vermessene Objekt weist keinerlei Unregelmäßigkeiten auf, so dass die Kurvenverläufe lediglich versetzt sind, jedoch denselben Integralwert aufweisen.

In der Praxis hängt der Intensitätswert jedoch von der Objektgeometrie bzw. einem gewissen Rückstrahlverhalten oder auch Ungenauigkeiten im Messsystem ab, so dass bei einer realen Vermessung die drei Kurvenverläufe tatsächlich unterschiedlich ausgeprägt sein werden. Dadurch, dass für beide Aufnahmen jedoch von denselben besonderen Eigenheiten ausgegangen wird, lässt sich der Einfluss der Eigenheiten auf das Messergebnis korrigieren.

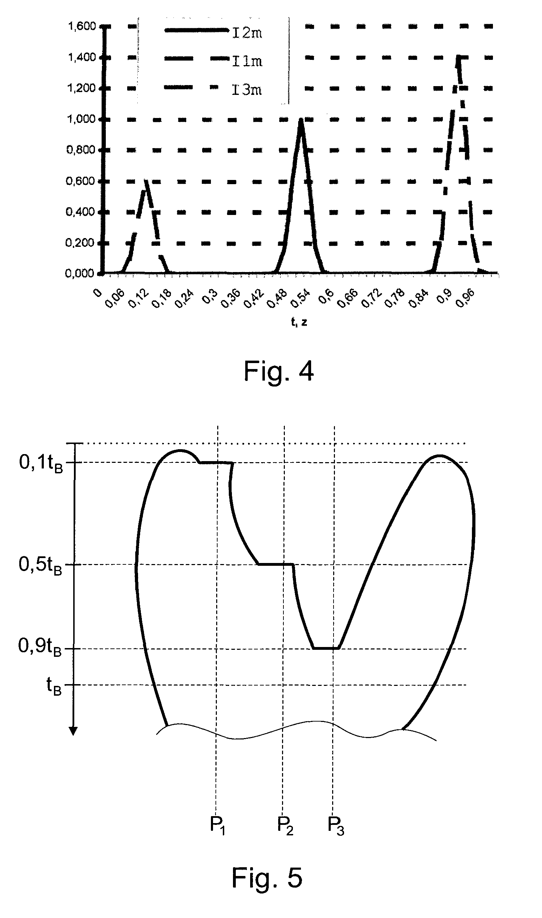

In **Fig. 4** ist der zeitliche Verlauf der Intensität bei Durchfokussieren mit variabler Beleuchtung I₁ gezeigt, wiederum ausgehend von dem idealen Objekt der Vermessung gemäß Fig. 3.

Aufgrund der während des Aufnahmezeitraums t_{B1} unterschiedlichen Intensität der Beleuchtung weisen die drei Kurven I₁, I₂, I₃ einen unterschiedlichen Verlauf auf, so dass sich die Integralwerte S₁, S₂, S₃ zum Zeitpunkt t₁, t₂ und t₃ voneinander unterscheiden. Im vorliegenden Fall ist für t₁ < t₂ < t₃ auch der Integralwert S₁ < S₂ < S₃. Mit Zahlenwerten ergibt sich für die Kurve I₁ ein Integralwert S₁ von 1,595, für die Kurve I₂ ein Integralwert S₂ von 2,658 und für die Kurve I₃ ein Integralwert S₃ von 3,721. Diese Summe ist das auf dem Sensor aufintegrierte Messsignal I, aus dem der Objektabstand z bestimmt wird.

Zur Erfassung des Objekts wird eine erste Aufnahme ohne Modulation von z.B. der Intensität der Lichtquelle durch Regelung des Stromes und anschließend eine Aufnahme mit Modulation durchgeführt. Bei beiden Aufnahmen wird der optische Weg über die Zeit t in gleicher Weise verändert. Das Höhenbild wird aus den Intensitätsverhältnissen der Aufnahmen pixelgenau berechnet.

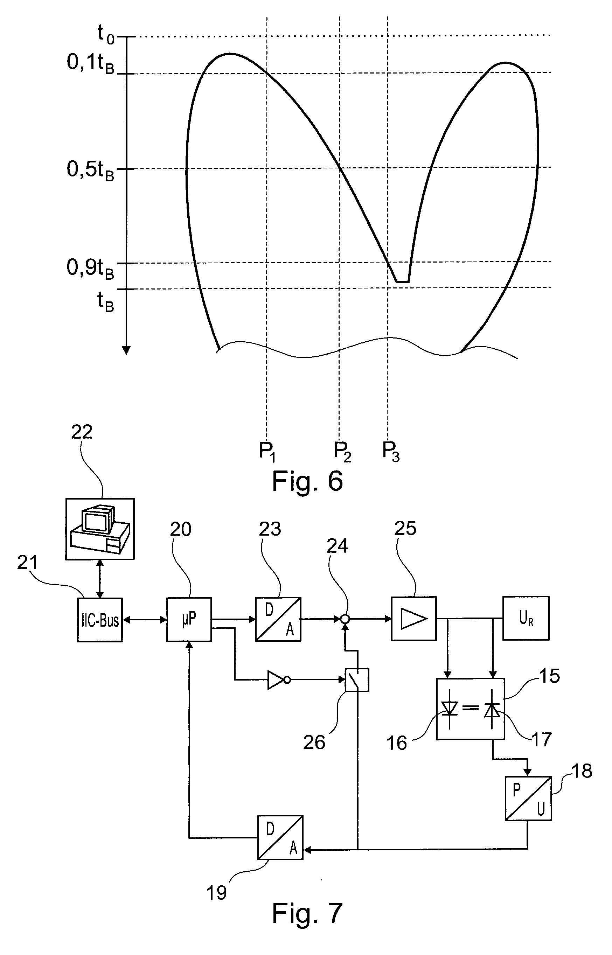

Die Intensität I des Signals hängt aber außer von der Fokussierung auch vom Objekt selber ab, so von der Oberflächenbeschaffenheit, dem Material, der Normalen zur optischen Achse usw. - siehe hierzu die **Fig. 5** **und** **6****.**

Um diese Intensitätsmodulation aus dem Messsignal, das nur durch die Objekthöhe bestimmt sein soll, zu eliminieren, wird eine Referenzmessung während eines Aufnahmezeitraums t_{B2} durchgeführt. Bei dieser Referenzmessung wird der Fokus auf die gleiche Art und Weise geändert wie bei der vorherigen oder späteren Höhenmessung, wobei die Beleuchtung aber konstant gehalten wird. Auf diese Weise wird sichergestellt, dass nur die durch das Objekt 6 hervorgerufene Intensitätsmodulation gemessen wird.

Durch eine pixelweise Division der Messaufnahme durch die Referenzaufnahme wird eine Aufnahme erzeugt, die nur die Höheninformation der konfokalen Messung enthält.

Für eine genaue Auswertung muss die Abhängigkeit der Beleuchtung von der Zeit während der Messung über den Aufnahmezeitraum t_{B1} bekannt sein. Um dies zu erreichen, stehen mehrere Möglichkeiten zur Verfügung.

Bei einer Kalibration erfolgt eine Messung der Abhängigkeit der Beleuchtung, z.B. des auf das Objekt abgestrahlten Lichts, von der Zeit t. Diese Abhängigkeit muss dann bei der Messung immer gleich sein wie bei der Kalibration. Die Genauigkeit entspricht dann der Wiederholgenauigkeit.

Bei einer Messung der Beleuchtung während der Höhenmessung z. B. mit einer Photodiode ist der Verlauf der maßgeblichen Lichteigenschaft nicht nur grundsätzlich, sondern für die tatsächliche Aufnahmesituation bekannt. Die Wiederholgenauigkeit zwischen zwei unmittelbar hintereinander erstellten Aufnahmen bestimmt hier die Genauigkeit.

Bei einer Regelung der Beleuchtung während der Höhenmessung z. B. mit einer Photodiode als Monitordiode, ähnlich wie bei Laserdioden-Baugruppen, kann darüber hinaus das gewünschte Profil eingestellt, überwacht und nachgeregelt werden.

Der Aufnahmezeitraum zur Erstellung der Referenzaufnahme t_{B2} ist genauso groß wie der Aufnahmezeitraum zur Erstellung der Vermessungsaufnahme t_{B1}, da die Fokussierung in gleicher Weise wie bei der Vermessungsaufnahme verändert wird.

Eine solche Regelung ist in **Fig. 7** dargestellt. In einem Diodenmodul 15, in dem sich die zur Beleuchtung vorgesehene Laserdiode 16 befindet, ist weiterhin eine Monitordiode 17 so angeordnet, dass ein Teil des von der Laserdiode 16 abgestrahlten Lichts auf die Monitordiode 17 fällt. Die Ausgangsleistung der Monitordiode 17 hängt von der Intensität des von der Laserdiode 16 abgestrahlten und in die Monitordiode einfallenden Lichts ab.

Mittels eines Leistungsmessers 18 wird eine von der Ausgangsleistung abhängige Spannung erzeugt. Diese Spannung wird von einem Analog-Digital-Wandler 19 in ein digitales Signal umgewandelt, das in einem Mikroprozessor 20 verarbeitet werden kann. Der Mikroprozessor 20 kann den Istwert mit einem Sollwert vergleichen, der entweder im Mikroprozessor 20 selbst abgespeichert ist oder über eine Schnittstelle 21 von einem weiteren Gerät, beispielsweise einen Computer 22 eingespeist wird.

Der Mikroprozessor 20 erzeugt damit ein Steuersignal, mit dem die Leistungs- oder Stromzufuhr der Laserdiode 16 über einen Digital-Analog-Wandler 23 über einen Vergleicher 24 und einen Verstärker 25 geregelt wird. Der Mikroprozessor 20 kann darüber hinaus den Vergleicher 24 mit der der Leistung entsprechenden Spannung beaufschlagen, so dass nur die Differenz zwischen Soll- und Istwert zur Regelung der Laserdiode 16 verwendet wird. Dazu ist eine durch den Mikroprozessor 20 zu bedienende Schalteinheit 26 vorgesehen.

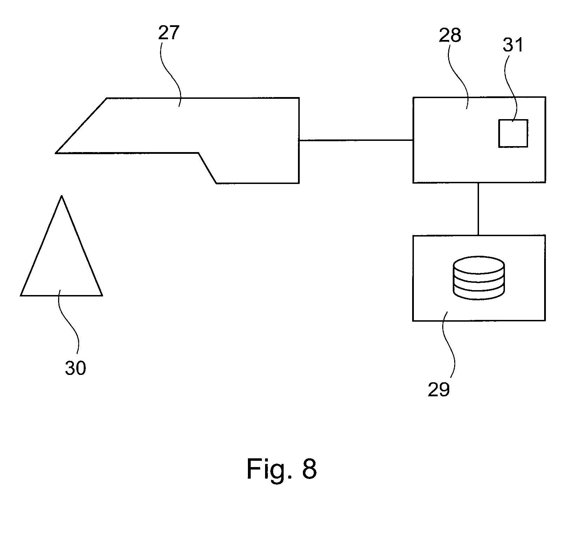

Die **Fig. 8** stellt eine Vermessungseinrichtung 27 als Einheit mit nebengeordneten Geräten dar. Zu den nebengeordneten Geräten zählt hauptsächlich eine Auswerteeinheit 28 und eine Speichereinheit 29. Zusätzlich ist ein Prüfkörper 30 dargestellt, dessen Funktion später erläutert wird. Die Auswerteeinheit 28 verfügt über Vergleichsmittel 31, die zum Vergleich verschiedener Aufnahmen dienen. So kann mit dem Vergleichsmittel 31 der Einfluss der Objekteigenschaften des Objekts 6 von den Vermessungsdaten mit Hilfe des Vergleichsmittels 31 eliminiert werden, so dass die reinen Höhendaten des Objekts 6 übrig bleiben. Die Auswerteeinheit 28 und die Speichermittel 29 können auch eine Einheit mit der Vermessungseinrichtung 27 bilden oder als eigenständige Einheit ausgeführt sein.

Darüber hinaus dient das Vergleichsmittel 31 zur Kalibration der Vermessungseinrichtung 27. Dazu wird der Prüfkörper 30 in mindestens einer Ausrichtung zur Vermessungseinrichtung 27 vermessen. Das Vergleichsmittel 31 vergleicht die tatsächlichen Vermessungsdaten mit der ihm bekannten Geometrie des Prüfkörpers 30 und kann daraus einerseits Ungenauigkeiten der Abbildungseinheit und andererseits den Zusammenhang der Veränderung der Lichteigenschaft mit der Höhe feststellen.

### Bezugszeichenliste

- 1: Lichtquelle
- 2: Optik
- 3: Blendenanordnung
- 4: Abbildungsoptik
- 5: abgestrahltes Licht
- 6: vermessendes Objekt
- 6': Objektpunkte
- 7: Beobachtungsstrahlengang
- 8: Strahlteiler
- 9: Empfängeroptik
- 10: Bildempfänger
- 11: Mittel zur Veränderung der optischen Weglänge
- 12: Steuermittel
- 13: LCD-Schirm
- 14: Diodenmodul
- 15: Laserdiode
- 16: Monitordiode
- 17: Leistungsmesser
- 18: Analog-Digital-Wandler
- 19: Mikroprozessor
- 20: Schnittstelle
- 21: Computer
- 22: Analog-Digital-Wandler
- 23: Vergleicher
- 24: Verstärker
- 25: Schalteinheit
- 26: Vermessungseinrichtungen
- 27: Auswertemittel
- 28: Speichermittel
- 29: Prüfkörper
- 30: Vergleichsmittel

- I: Intensitätswert des Messsignals
- I₁; I₂; I₃: Intensitätswerte der variablen Beleuchtung
- I_{K}: Intensität der konstanten Beleuchtung
- S₁; S₂; S₃: Integralwerte
- t: Belichtungszeit
- t₁; t₂; t₃: Zeitpunkte
- t_{B1}: Aufnahmezeitraum zur Erstellung der Vermessungsaufnahme
- t_{B2}: Aufnahmezeitraum zur Erstellung der Referenzaufnahme
- Z: Objektabstand
- Zₛ: Höhenkoordinate

## Patentansprüche

1. Vermessungseinrichtung (27) zur konfokalen Vermessung eines Objekts (6), umfassend eine Lichtquelle (1), eine Abbildungsoptik (4) zur Fokussierung des von der Lichtquelle (1) abgestrahlten Lichts (5) auf das zu vermessende Objekt (6), einen Bildempfänger (10) für das am Objekt (6) zurückgestreute und durch dieselbe Abbildungsoptik (4) hindurchgetretene Licht (7) eines Objektpunktes (6'), wobei die Vermessungseinrichtung (27) weiterhin umfasst:
- erste Mittel (11) zur Veränderung der optischen Weglänge, die im Strahlengang zwischen einer Blendenanordnung (3) und dem Objekt (6) angeordnet sind, wobei die ersten Mittel (11) dazu eingerichtet sind, den optischen Abstand der Bildebene von der Abbildungsoptik (4) in vorgegebener Weise zu verändern,
- zweite Mittel (12, 13) zur Beeinflussung der Lichteigenschaften während eines Aufnahmezeitraums (t_{B1}) die dazu eingerichtet sind, das von der Lichtquelle auf das Objekt (6) abgestrahlte Licht (5) und/oder das vom Objekt (6) zurückgestrahlte und auf den Sensor auftreffende Licht (7) während des Aufnahmezeitraums (t_{B1}) einer Aufnahme in mindestens einer Eigenschaft so zu verändern, dass während des Aufnahmezeitraums (t_{B1}) ein als Profil vorgegebener zeitlicher Zusammenhang zwischen der Eigenschaft des Lichts (5, 7) und dem optischen Abstand der Bildebene von der Abbildungsoptik (4) gegeben ist,
- dritte Mittel (10), die dazu eingerichtet sind, für den Aufnahmezeitraum (t_{B1}) einen von den Eigenschaften des Lichts des Beobachtungsstrahlenganges (7) abhängigen Messwert zu liefern, wobei aus dem Messwert des Aufnahmezeitraums (t_{B1}) und einem Vergleichswert eine Höhenkoordinate (zₛ) des Objekts (6) rekonstruierbar ist, sowie
- vierte Mittel (31), eingerichtet zur Bestimmung des Vergleichswerts anhand einer zweiten Aufnahme mit einer zweiten Aufnahmezeit (t_{B2}) und einem zweiten Profil für den Zusammenhang zwischen der Eigenschaft des Lichts (5, 7) und dem Abstand.

2. Vermessungseinrichtung (27) nach Anspruch 1, **dadurch gekennzeichnet, dass** die beeinflusste Eigenschaft des Lichts (5, 7) ausgewählt ist aus der Lichtintensität und der Wellenlänge und dem Spektrum.

3. Vermessungseinrichtung (27) nach Anspruch 2, **dadurch gekennzeichnet, dass** für die Beeinflussung der Lichtintensität des auf das Objekt (6) abgestrahlten Lichts (5) eine Regelung für die Lichtquelle (1) vorgesehen ist, wobei insbesondere ein Sensor (12) für die Erfassung der Eigenschaft des auf das Objekt (6) abgestrahlten Lichts (5) vorhanden ist.

4. Vermessungseinrichtung (27) nach Anspruch 3, **dadurch gekennzeichnet, dass** der Sensor (12) Bestandteil der Lichtquelle (1) ist und dass mittels eines Ausgangssignals des Sensors (12) eine Steuerung und/oder Regelung des Stroms und/oder der Versorgungsspannung der Lichtquelle (1) zur Verwirklichung des vorgegebenen Profils erfolgt.

5. Vermessungseinrichtung (27) nach einem der Ansprüche 1 bis 4, **dadurch gekennzeichnet, dass** die zweiten Mittel (13) zur Beeinflussung der Lichteigenschaften veränderliche Transparenz aufweisen.

6. Vermessungseinrichtung (28) nach Anspruch 5, **dadurch gekennzeichnet, dass** die zweiten Mittel (13) als LCD-Schirm oder in Form zweier gegeneinander verstellbarer Polarisationsfilter ausgebildet sind.

7. Vermessungseinrichtung (27) nach Anspruch 4, **dadurch gekennzeichnet, dass** zweite Mittel (13) zur Veränderung des Farbspektrums vorgesehen sind.

8. Vermessungseinrichtung (27) nach einem der Ansprüche 1 bis 7, **dadurch gekennzeichnet, dass** Auswertemittel (28) zur Auswertung aufgenommener Bilddaten und zur Erzeugung von Vermessungsdaten und weiterhin Speichermittel (29) für die Bilddaten und/oder die Vermessungsdaten vorgesehen sind.

9. Vermessungseinrichtung (27) nach Anspruch 8, **dadurch gekennzeichnet, dass** in den Speichermitteln (29) Prüfdaten gespeichert sind und dass die Auswertemittel (30) über Vergleichsmittel (31) verfügen, um Korrekturdaten zu erzeugen und abzuspeichern und die in den Speichermitteln (29) abgelegten Korrekturdaten auf die Vermessungsdaten anzuwenden.

10. Vermessungseinrichtung (27) nach einem der Ansprüche 1 bis 9, **dadurch gekennzeichnet, dass** die Fokussierung für die erste und die zweite Aufnahme in verschiedenen Richtungen durchfahren werden können.

11. Verfahren zur konfokalen Vermessung eines Objekts (6), bei dem von einer Lichtquelle (1) Licht (5) abgestrahlt und über eine Abbildungsoptik (4) auf das zu vermessende Objekt (6) fokussiert wird, bei dem weiterhin das am Objekt (6) zurückgestreute und durch dieselbe Abbildungsoptik (4) hindurchgetretene Licht (7) eines Objektpunktes (6') mit einem Bildempfänger (10) erfasst wird, wobei
- der optische Abstand der Bildebene von der Abbildungsoptik (4) in vorgegebener Weise während eines Aufnahmezeitraums verändert wird, wobei weiterhin
- das von der Lichtquelle (1) auf das Objekt (6) abgestrahlte Licht (5) und/oder das vom Objekt (6) zurückgestrahlte und auf den Sensor (10) auftreffende Licht (7) während eines Aufnahmezeitraums (t_{B1}) einer Aufnahme in mindestens einer Eigenschaft verändert wird, wobei während eines Aufnahmezeitraums (t_{B1}) ein als Profil vorgegebener zeitlicher Zusammenhang zwischen der Eigenschaft des Lichts (5, 7) und dem optischen Abstand der Bildebene von der Abbildungsoptik (4) hergestellt ist,
- ein von der Eigenschaft des Lichts des Beobachtungsstrahlenganges (7) abhängiger Messwert ermittelt wird
- aus dem Vergleich des Messwerts des Aufnahmezeitraums (t_{B1}) mit einem Vergleichswert eine Höhenkoordinate (zₛ) des Objekts (6) rekonstruiert wird und
- der Vergleichswert anhand einer zweiten Aufnahme mit einer zweiten Aufnahmezeit (t_{B2}) und einem zweiten Profil für die Eigenschaften des Lichts (5, 7) und den Abstand bestimmt wird.

12. Verfahren nach Anspruch 11, **dadurch gekennzeichnet, dass** die Eigenschaft des Lichts (5, 7) bei der Bestimmung des Vergleichswerts eine geringere Veränderung erfährt als bei der Erstellung der Messaufnahme, insbesondere, dass die Eigenschaft des Lichts (5, 7) konstant gehalten wird.

13. Verfahren nach einem der Ansprüche 11 bis 12, **dadurch gekennzeichnet, dass** bei beiden Aufnahmen der optische Weg über die Zeit in gleicher Weise verändert wird.

14. Verfahren nach einem der Ansprüche 11 bis 13, **dadurch gekennzeichnet, dass** die zweite Aufnahme in einem Durchgang vor oder nach dem Aufnahmezeitraum (t_{B1}) zur Vermessung des Objekts (6) erzeugt wird.

15. Verfahren nach einem der Ansprüche 11 bis 14, **dadurch gekennzeichnet, dass** ein Sensor (12) die Eigenschaft des Lichts (5, 7) erfasst und mittels des Ausgangssignals des Sensors eine Regelung der Änderung der Eigenschaft des Lichts (5) vorgenommen wird.

16. Verfahren nach einem der Ansprüche 11 bis 15, **dadurch gekennzeichnet, dass** das Profil im Rahmen einer Kalibration an veränderte Umgebungsbedingungen angepasst wird.

## Claims

1. A scanning device (27) for the confocal scanning of an object (6), comprising a light source (1), an imaging lens system (4) for focussing the light (5) emitted by the light source (1) onto the object (6) to be scanned, an image receiver (10) for the light (7) reflected back to the object (6) from a point on the object (6') and passing through the same imaging lens system (4), wherein the scanning device (27) additionally comprises:
- first means (11) for changing the optical path length which are arranged in the beam path between a diaphragm arrangement (3) and the object (6), wherein the first means (11) are designed such as to change the optical distance between the image plane and the imaging lens system (4) in the manner proposed,
- second means (12, 13) for influencing the light properties during a recording period (t_{B1}), which are designed such that light (5) emitted by the light source and falling onto the object (6), and / or the light (7) reflected back from the object (6) and falling on the sensor can, during the recording period (t_{B1}) of a recording, be modified in at least one property such that, during the recording period (t_{B1}), there is a temporal relationship between the property of the light (5, 7) and the optical distance of the image plane from the imaging lens system (4) which is predefined as a profile,
- third means (10) which are designed so as to supply for the recording period (t_{B1}) a measured value dependent on the properties of the light of the viewing beam path (7), wherein a height coordinate (zₛ) of the object (6) can be reconstructed from the measured value of the recording period (t_{B1}) and a comparison value, and also
- fourth means (31) configured for determining the comparison value on the basis of a second recording with a second recording period (t_{B2}) and a second profile for the relationship between the property of the light (5, 7) and the distance.

2. A scanning device (27) according to claim 1, **characterized by** the influenced property of the light (5, 7) being selected from the light intensity and the wavelength and the spectrum.

3. A scanning device (27) according to claim 2, **characterized by** a regulating device for the light source (1) being provided for influencing the light intensity of the light (5) reflected on the object (6), wherein in particular a sensor (12) for registering the property of the light (5) reflected on the object (6) is present.

4. A scanning device (27) according to claim 3, **characterized by** the sensor (12) being a constituent part of the light source (1), and by an output signal of the sensor (12) being used to control and / or regulate the current and / or the supply voltage of the light source (1) in order to implement the predefined profile.

5. A scanning device (27) according to any of claims 1 to 4, **characterized by** the second means (13) for influencing the light properties having a changeable level of transparency.

6. A scanning device (28) according to claim 5, **characterized by** the second means (13) taking the form of an LCD screen or two polarization filters which can be adjusted in relation to each other.

7. A scanning device (27) according to claim 4, **characterized by** second means (13) being provided for modifying the colour spectrum.

8. A scanning device (27) according to any of claims 1 to 7, **characterized by** evaluation means (28) being provided for evaluating recorded image data and for generating scanning data, and furthermore storage media (29) being provided for the image data and / or scanning data.

9. A scanning device (27) according to claim 8, **characterized by** test data being stored in the storage media (29), and by the evaluation means (30) having comparison means (31) for generating and saving correction data and applying to the scanning data the correction data saved in the storage media (29).

10. A scanning device (27) according to any of claims 1 to 9, **characterized by** it being possible to carry out focussing for the first and second recordings in various directions.

11. A procedure for the confocal scanning of an object (6) wherein light (5) is emitted by a light source (1) and by means of an imaging lens system (4) is focussed on an object (6) to be scanned, wherein furthermore the light (7) reflected back at the object (6) from a point on the object (6') and passing through the same imaging lens system (4) is registered with an image receiver (10), wherein
- the optical distance of the image plane from the imaging lens system (4) is modified in a specified manner during a recording period, wherein furthermore
- the light (5) emitted by the light source and falling onto the object (6) and / or the light (7) reflected back from the object (6) and falling on the sensor (10) is modified in at least one property during a recording period (t_{B1}) of a recording, wherein during a recording period (t_{B1}), a temporal relationship between the property of the light (5, 7) and the optical distance of the image plane from the imaging lens system (4) is established as a profile,
- a measured value dependent on the property of the light of the viewing optical path (7) is determined
- a height coordinate (zₛ) of the object (6) is reconstructed from a comparison of the measured value of the recording period (t_{B1}) and a comparison value, and
- the comparison value is determined on the basis of a second recording with a second recording period (t_{B2}) and a second profile for the properties of the light (5, 7) and the distance.

12. A procedure according to claim 11, **characterized by** the property of the light (5, 7) in determining the comparison value undergoing a smaller change than when creating the scan, and in particular by the property of the light (5, 7) being held constant.

13. A procedure according to either of claims 11 and 12, **characterized by** the optical path over time being modified in the same way in both recordings.

14. A procedure according to any of claims 11 to 13, **characterized by** the second recording being produced in one pass before or after the recording period (t_{B1}) in order to scan the object (6).

15. A procedure according to any of claims 11 to 14, **characterized by** a sensor (12) registering the property of the light (5, 7), and regulation of the change in the property of the light (5) being carried out by means of the output signal of the sensor.

16. A procedure according to any of claims 11 to 15, **characterized by** the profile being adjusted to changed ambient conditions within the context of a calibration procedure.

## Revendications

1. Dispositif de mesure (27) destiné à la mesure confocale d'un objet (6), comprenant une source de lumière (1), une optique d'imagerie (4) pour la focalisation de la lumière (5) émise par la source de lumière (1) sur l'objet (6) à mesurer, un récepteur d'image (10) pour la lumière (7) d'un point de l'objet (6') renvoyée par l'objet (6) et ayant traversé l'optique d'imagerie (4), dans lequel le dispositif de mesure (27) comprend en outre :
- des premiers moyens (11) de modification de la longueur d'onde optique, agencés dans la trajectoire optique entre un dispositif obturateur (3) et l'objet (6), dans lequel les premiers moyens (11) sont agencés pour modifier la distance optique du plan d'image de l'optique d'imagerie (4) de manière prédéterminée,
- des deuxièmes moyens (12, 13) destinés à influencer les propriétés de la lumière pendant une durée de prise d'image (t_{B1}), agencés afin de modifier la lumière (5) émise par la source de lumière sur l'objet (6) et/ou la lumière (7) renvoyée par l'objet (6) et incidente sur le capteur pendant la durée de prise d'image (t_{B1}) d'une prise d'image pour ce qui est d'au moins une propriété, de sorte que, pendant la durée de prise d'image (t_{B1}), une relation temporelle prédéfinie en tant que profil entre la propriété de la lumière (5, 7) et la distance optique du plan d'image est donnée par l'optique d'imagerie (4),
- des troisièmes moyens (10), agencés pour, pendant la durée de prise d'image (t_{B1}), fournir une valeur de mesure dépendant des propriétés de la lumière du faisceau d'observation (7), moyennant quoi une coordonnée de hauteur (zₛ) de l'objet (6) peut être reconstruite à partir de la valeur de mesure de la durée de prise d'image (t_{B1}) et d'une valeur de comparaison, ainsi que
- des quatrièmes moyens (31), agencés pour déterminer la valeur de comparaison à l'aide d'une deuxième prise d'image avec une deuxième durée de prise d'image (t_{B2}) et d'un deuxième profil pour la relation entre la propriété de la lumière (5, 7) et la distance.

2. Dispositif de mesure (27) selon la revendication 1, **caractérisé en ce que** la propriété influencée de la lumière (5, 7) est choisie parmi l'intensité de la lumière, la longueur d'onde et le spectre.

3. Dispositif de mesure (27) selon la revendication 2, **caractérisé en ce qu'**une régulation pour la source de lumière (1) est prévue, afin d'influencer l'intensité de lumière de la lumière (5) émise sur l'objet (6), dans lequel, notamment, un capteur (12) pour déterminer la propriété de la lumière (5) émise sur l'objet (6) est disponible.

4. Dispositif de mesure (27) selon la revendication 3, **caractérisé en ce que** le capteur (12) est un élément constitutif de la source de lumière (1) et **en ce que**, par l'intermédiaire d'un signal de sortie du capteur (12), une commande et/ou une régulation du courant et/ou de la tension d'alimentation de la source de lumière (1) est effectuée pour la concrétisation du profil.

5. Dispositif de mesure (27) selon l'une quelconque des revendications 1 à 4, **caractérisé en ce que** les deuxièmes moyens (13) destinés à influencer les propriétés de lumière présentent une transparence variable.

6. Dispositif de mesure (28) selon la revendication 5, **caractérisé en ce que** les deuxièmes moyens (13) sont conçus comme un écran LCD ou sous la forme de deux filtres de polarisation pouvant être réglés l'un par rapport à l'autre.

7. Dispositif de mesure (27) selon la revendication 4, **caractérisé en ce que** les deuxièmes moyens (13) sont prévus pour la modification du spectre de couleurs.

8. Dispositif de mesure (27) selon l'une quelconque des revendications 1 à 7, **caractérisé en ce que** des moyens d'évaluation (28) destinés à évaluer des données d'image capturées et à créer des données de mesures et, en outre, des moyens de mémorisation (29) pour les données d'image et/ou les données de mesure, sont prévus.

9. Dispositif de mesure (27) selon la revendication 8, **caractérisé en ce que** des données de vérification sont mémorisées dans les moyens de mémorisation (29) et **en ce que** les moyens d'évaluation (30) disposent de moyens de comparaison (31), afin de créer et de mémoriser des données de correction et d'utiliser les données de correction présentes dans les moyens de mémorisation (29) sur les données de mesure.

10. Dispositif de mesure (27) selon l'une quelconque des revendications 1 à 9, **caractérisé en ce que** la focalisation pour la première et la deuxième prise d'image peut être réalisée dans des directions différentes.

11. Procédé de mesure confocale d'un objet (6), selon lequel de la lumière (5) est émise d'une source de lumière (1) et focalisée par le biais d'une optique d'imagerie (4) sur l'objet (6) à mesurer, selon lequel en outre la lumière (7) d'un point d'objet (6') renvoyée par l'objet (6) et ayant traversé l'optique d'imagerie (4) est déterminée par un récepteur d'image (10), dans lequel
- la distance optique du plan d'image de l'optique d'imagerie (4) est modifiée de manière prédéterminée pendant une durée de prise d'image, dans lequel en outre
- la lumière (5) émise par la source de lumière (1) sur l'objet (6) et/ou la lumière (7) renvoyée par l'objet (6) et incidente sur le capteur (10) pendant la durée de prise d'image (t_{B1}) d'une prise d'image est modifiée pour ce qui est d'au moins une propriété, dans lequel, pendant la durée de prise d'image (t_{B1}), une relation temporelle prédéfinie en tant que profil entre la propriété de la lumière (5, 7) et la distance optique du plan d'image est donnée par l'optique d'imagerie (4),
- une valeur de mesure dépendant de la propriété de la lumière du faisceau d'observation (7) est déterminée
- une coordonnée de hauteur (zₛ) de l'objet (6) est reconstruite à partir de la comparaison de la valeur de mesure de la durée de prise d'image (t_{B1}) et d'une valeur de comparaison et
- la valeur de comparaison est déterminée à l'aide d'une deuxième prise d'image avec une deuxième durée de prise d'image (t_{B2}) et d'un deuxième profil pour les propriétés de la lumière (5, 7) et la distance.

12. Procédé selon la revendication 11, **caractérisé en ce que** la propriété de la lumière (5, 7) subit une modification moindre lors de la détermination de la valeur de comparaison que lors de la création de la prise d'image de mesure, notamment **en ce que** la propriété de la lumière (5, 7) est maintenue constante.

13. Procédé selon l'une quelconque des revendications 11 à 12, **caractérisé en ce que** la voie optique pour les deux prises d'image est modifiée de la même manière au cours du temps.

14. Procédé selon l'une quelconque des revendications 11 à 13, **caractérisé en ce que** la deuxième prise d'image est créée pendant un passage avant ou après la durée de prise d'image (t_{B1}) pour la mesure de l'objet (6).

15. Procédé selon l'une quelconque des revendications 11 à 14, **caractérisé en ce qu'**un capteur (12) détermine la propriété de la lumière (5, 7) et, par l'intermédiaire du signal de sortie du capteur, une régulation de la modification de la propriété de la lumière (5) est réalisée.

16. Procédé selon l'une quelconque des revendications 11 à 15, **caractérisé en ce que** le profil est adapté dans le cadre d'un étalonnage, aux conditions environnementales modifiées.
